# EUROPÄISCHE PATENTSCHRIFT

(11) **EP 1 123 842 B1**
(45) Veröffentlichungstag und Bekanntmachung des Hinweises auf die Patenterteilung: **28.12.2005**
(21) Anmeldenummer: 01101075.8
(22) Anmeldetag: 18.01.2001
(51) Int. Cl.: B60R 16/02

(54) **Fahrerassistenzsystem und Verfahren zur Steuerung von einer Informationsdarstellung, von Kommunikationsmitteln und von einer Aktorik in einem Fahrzeug**
Driver assist system and control method for representation of information, for communication means and for actuators in a vehicle
Système d'assistance au conducteur et méthode pour commander une représentation d'informations, de moyens de communication et d'actionneurs dans un véhicule

(30) Priorität: 09.02.2000 DE 10005566
(43) Veröffentlichungstag der Anmeldung: 16.08.2001
(73) Patentinhaber: ROBERT BOSCH GMBH, 70442 Stuttgart (DE)
(72) Erfinder: Koenig, Winfried, 76327 Pfinztal (DE); Eschler, Johannes, 71254 Ditzingen (DE); Engelsberg, Andreas, 31141 Hildesheim (DE); Kynast, Andreas, 31139 Hildesheim (DE); Kersken, Ulrich, 31199 Diekholzen (DE); Kussmann, Holger, 31180 Giesen (DE)

(56) Entgegenhaltungen:
- WO-A-96/22202
- DE-A- 3 712 170
- DE-A- 4 416 507
- DE-A- 19 753 742
- US-A- 4 058 796
- US-A- 5 513 107
- US-A- 5 954 781

## Beschreibung

### Stand der Technik

Die Erfindung geht aus von einem Fahrerassistenzsystem bzw. einem Verfahren zur Steuerung von einer Informationsdarstellung, von Kommunikationsmitteln und von einer Aktorik in einem Fahrzeug nach der Gattung der unabhängigen Patentansprüche.

In einem Fahrzeug wie z.B. einem Kraftfahrzeug, gibt es bereits verschiedene Informations-, Kommunikations- und Unterhaltungsquellen sowie verschiedene Aktoren, die nach Wunsch eingestellt werden können. Diese unterschiedlichen Geräte weisen meist eine unterschiedliche Bedienphilosophie auf, so dass jeweils eine separate Bedienung erforderlich ist.

Weiterhin stellen Geräte, die Informationen darstellen, oder auch Kommunikationsmittel unabhängig voneinander mit einem Benutzer eine Verbindung her, indem gleichzeitig von den Geräten Informationen dargestellt werden und zusätzlich die Kommunikationsmittel, z. B. ein Telefon, eine Kommunikation ankündigen. Verschiedene Fahrer eines Fahrzeugs werden unterschiedliche Voreinstellungen bezüglich der Aktoren und der Mittel zur Informationsdarstellung sowie der Kommunikationsmittel haben und vornehmen. Dies macht eine individuelle Voreinstellung bei Beginn einer Fahrt erforderlich.

Aus US-4,058,796 A ist ein Fahrerassistenzsystem bekannt, bei dem Fahrbedingungen bezogen auf das Fahrverhalten erkannt werden, um ein Variationsmuster der Fahrbedingungen in Abhängigkeit der Variationen der Fahrbedingungen im Bezug auf die Zeit und einen Grad der Abweichung des Variationsmuster vom durchschnittlichen Muster zu bestimmen. Dabei ist eine Information bereitzustellen, um den Fahrer bei dem Betrieb des Fahrzeugs zu unterstützen.

Aus US-5,513,107 A (Oberbegriff von Anspruch 1 bzw. 13) ist eine Fahrzeugsteuerung bekannt, bei der nach dem Fahrzeugtyp für das Fahrzeug entsprechende Parameter geladen werden, um Fahrzeugsubsysteme zu betreiben.

### Vorteile der Erfindung

Das erfindungsgemäße Fahrerassistenzsystem bzw. das erfindungsgemäße Verfahren zur Steuerung von einer Informationsdarstellung, von Kommunikationsmitteln und von einer Aktorik in einem Fahrzeug haben demgegenüber den Vorteil, dass ein einheitliches Bedienkonzept vorliegt, so dass der Fahrer nicht die unterschiedliche Bedienung von unterschiedlichen Geräten erlernen muß. Dies führt zu einem erheblichen Zeitvorteil, und es erleichtert die Bedienung in einem Fahrzeug erheblich. Dadurch wird auch die Bedienung schneller und Fehleingaben werden reduziert.

Darüber hinaus muß der Fahrer nicht über vorhandene Geräte informiert sein, da dies das erfindungsgemäße Fahrerassistenzsystem ihm abnimmt. Dabei muß der Fahrer nur seinen Wunsch äußern, und das Fahrerassistenzsystem führt diesen Wunsch mittels den vorhandenen Geräten als Ausführungsbefehl aus. Dies erhöht weiterhin die Sicherheit des Fahrers erheblich, da er auf multimediale Weise seinen Wunsch äußern kann, einmal durch Sprache, durch haptische Eingaben oder auch durch eine Blickrichtungsänderung, so dass der Fahrer eine in einer bestimmten Situation eine ihm genehme Form der Wunschäußerung auswählt.

Vorteilhafterweise nutzt das erfindungsgemäße Fahrerassistenzsystem bei der Ausführung des Ausführungsbefehls des Fahrers die Kenntnis über vorhandene Geräte (Anzeige, Lautsprecher, Kommunikationsmittel) in Abhängigkeit von Sensorenwerten, die eine Fahrsituation charakterisieren und von abgespeicherten Daten, die persönlichen Präferenzen oder Priorisierungen angeben. Als abgespeicherte Daten sind auch Angaben über vorhandene Geräte zu verstehen.

Weiterhin ist es von Vorteil, dass in einem Fall, wenn ein Fahrerwunsch als Ausführungsbefehl nicht wunschgemäß ausgeführt werden kann, dem Fahrer mittels einer Informationsausgabe mitgeteilt wird, dass es nicht möglich ist, seinen Wunsch auszuführen. In dieser Situation teilt dann der Fahrer dem Fahrerassistenzsystem einen präzisierten Wunsch mit, oder er äußert einen alternativen Wunsch. Der Fahrer wird damit implizit über die Möglichkeiten des Fahrzeugs, beispielsweise zur Informationsdarstellung informiert. Zu solchen Situationen kommt es, wenn es beispielsweise der Fall ist, dass mehrere Geräte den Fahrerwunsch als Ausführungsbefehl ausführen können. Es liegen also Kollisionen vor. Ein anderer Fall, der auch zu einer Nichtausführung des Ausführungsbefehl führt, ist, dass der Ausführungsbefehl überhaupt nicht ausgeführt werden kann, da vorhandene Geräte zu einer Ausführung nicht in der Lage sind.

Durch die in den abhängigen Ansprüchen aufgeführten Maßnahmen und Weiterbildungen sind vorteilhafte Verbesserungen des Fahrerassistenzsystems bzw. des Verfahrens zur Steuerung von einer Informationsdarstellung, von Kommunikationsmitteln und von einer Aktorik in einem Fahrzeug möglich.

Besonders vorteilhaft ist, dass der Prozessor des Fahrerassistenzsystems ein Benutzerprofil anlegt, so dass darin fahrerspezifische Daten abgelegt werden, die für einen jeweiligen Fahrer zu Beginn einer Fahrt abgerufen werden, um die entsprechenden Voreinstellungen vorzunehmen. Der Abruf des Benutzerprofils ist vorteilhafterweise mit einer Identifikation des Fahrers verbunden, um festzustellen, für welchen Fahrer ein Benutzerprofil zu laden ist. Dies erspart dem Fahrer persönliche Voreinstellungen zu Beginn der Fahrt und führt somit zu einer erheblichen Zeitersparnis.

Darüber hinaus ist es von Vorteil, dass verschiedenen Ausführungsbefehlen unterschiedliche Prioritäten zugeordnet werden, nach denen diese Ausführungsbefehle ausgeführt werden. Diese Prioritäten werden in Abhängigkeit von einer Situationserkennung, von Sensorenwerten, von vorhandenen Geräten von Kommunikationsmitteln und von abgespeicherten Daten vergeben. Damit wird vorteilhafterweise ein Fahrer in Streßsituationen nicht mit unnötigen Informationen belastet. Dies führt das Fahrerassistenzsystem nach abgespeicherten Regeln durch.

Darüber hinaus ist es von Vorteil, dass die Mittel zur Personenerkennung Signalprozessoren aufweisen, so dass mittels Software, die auf diesen Signalprozessoren abläuft, ein Zustand eines Fahrers anhand seiner Stimme und seines optischen Eindrucks erkannt wird. Dazu greift die Software auf abgespeicherte Daten zurück, um diese Daten mit den aktuellen biometrischen Daten des Fahrers zu vergleichen. Der Zustand des Fahrers wird zur Interpretation eines Ausführungsbefehls mit verwendet. Dabei kann vorteilhafterweise in einer Streßsituation ein Fahrer entspannt werden, oder der Ausführungsbefehl führt dazu, dass die Menge an dargestellten Informationen reduziert wird.

Des weiteren ist es von Vorteil, dass als Anzeige ein Netzhautprojektor verwendet wird, wodurch eine dreidimensionale Darstellung und der Verzicht auf eine Projektionsfläche erreicht wird. Dies führt zu einer Platzeinsparung im Fahrzeug und einer anschaulichen Darstellung der Informationen.

Weiterhin ist es von Vorteil, dass ein stereoskopischer Bildschirm als Anzeige verwendet wird, so dass eine dreidimensionale Darstellung und damit eine wirklichkeitsgetreuere Darstellung erreicht wird, die einem Fahrer aussagekräftigere Informationen liefert.

Alternativ ist es von Vorteil, dass als Anzeige ein Frontscheibenprojektor verwendet wird, der dazu führt, dass eine Informationsdarstellung in Blickrichtung des Fahrers erzeugt wird, so dass der Fahrer seinen Blick nicht von dem Verkehr abwenden muß, wodurch eine erhöhte Sicherheit für den Fahrer und den Straßenverkehr erreicht wird.

Weiterhin ist es von Vorteil, dass das erfindungsgemäße Fahrerassistenzsystem ein Mikrophon aufweist, so dass der Fahrer mittels Sprache Wünsche äußern kann, die in Ausführungsbefehle umgesetzt werden. Vorteilhafterweise werden die Daten von dem Mikrofon auch für eine Analyse der Stimme des Fahrers, die Aufschluß über seinen Zustand gibt, verwendet.

Darüber hinaus ist es von Vorteil, dass die Anzeige eine berührungssensitive Schicht aufweist, die es ermöglicht Eingabe auf der Anzeige selbst durchzuführen. Dies reduziert vorteilhafterweise den notwendigen Platz im Fahrzeug für die Anzeige und die Eingabevorrichtung für haptische Eingaben. Werden die Bedienelemente dabei vorteilhafterweise nach Wunsch des Fahrers auf der Anzeige symbolhaft dargestellt, erhöht dies die Akzeptanz des erfindungsgemäßen Fahrerassistenzsystems.

Weiterhin ist es von Vorteil, dass eine Kamera eine Blickrichtungserkennung aufweist, so dass auch die Blickrichtung als Eingabemedium verwendet werden kann. Dies erleichtert vorteilhafterweise dem Fahrer die Eingabe von seinen Wünschen.

Schließlich ist es von Vorteil, dass die Geräte des Fahrerassistenzsystems über einen Bus verbunden sind, so dass eine einfache Verdrahtung und Kommunikation ermöglicht wird. Weiterhin erleichtert dies die einfache Ankopplung weiterer Geräte an das erfindungsgemäße Fahrerassistenzsystems.

### Zeichnung

Ausführungsbeispiele der Erfindung sind in der Zeichnung dargestellt und in der Beschreibung näher erläutert. Figur 1 zeigt das erfindungsgemäße Fahrerassistenzsystem, Figur 2 zeigt das erfindungsgemäße Fahrerassistenzsystem, wobei die Geräte des Fahrerassistenzsystems über einen Bus verbunden sind, und Figur 3 zeigt das erfindungsgemäße Verfahren zur Steuerung von einer Informationsdarstellung, von Kommunikationsmitteln und von einer Aktorik in einem Fahrzeug.

### Beschreibung

Um einem Fahrer in einem Fahrzeug mit verschiedenen Geräten und Aktoren zur Bedienung nicht zu überfordern und damit nicht vom Verkehr abzulenken, ist ein einheitliches Konzept zur Bedienung erforderlich, das gleichzeitig die Fahrsicherheit erhöht und von dem Fahrer einen geringen Lernbedarf erfordert. Weiterhin ist es notwendig, den Fahrer automatisch von einer Informationsüberlast zu entlasten und in Streßsituationen den Informationsfluß zu reduzieren beziehungsweise zu regulieren.

Erfindungsgemäß weist das Fahrerassistenzsystem multimediale Eingabemöglichkeiten auf, wobei die Eingaben dann als Ausführungsbefehl interpretiert werden und dieser Ausführungsbefehl in Abhängigkeit von der Fahrsituation, den vorhandenen Geräten, von Sensorenwerten und von abgespeicherten Daten ausgeführt werden. Die Ausgabe wird dann mit einem entsprechenden Gerät ausgeführt, so dass eine gleichzeitige Darstellung unterbleibt. Weiterhin werden die Ausführungsbefehle mit einem Benutzerprofil abgeglichen und einer Priorisierung unterzogen. Auch eine Kontaktierung des Fahrers mittels Kommunikationsmitteln wird als Ausführungsbefehl interpretiert und in Abhängigkeit von der aktuellen Situation ausgeführt. Damit ergeben sich zwei wesentliche Teile des Fahrerassistenzsystems, zum einen einen Fahrerwunschinterpreter und zum anderen ein Ressourcenmanager, der gemäß einem vom Fahrerwunschinterpreter ermittelten Fahrerwunsch als Ausführungsbefehl entsprechende Ressourcen zur Ausführung des Ausführungsbefehls bereitstellt. Die eigentliche Ausführung des Ausführungsbefehls wird dann von dem entsprechenden Gerät selbst vorgenommen.

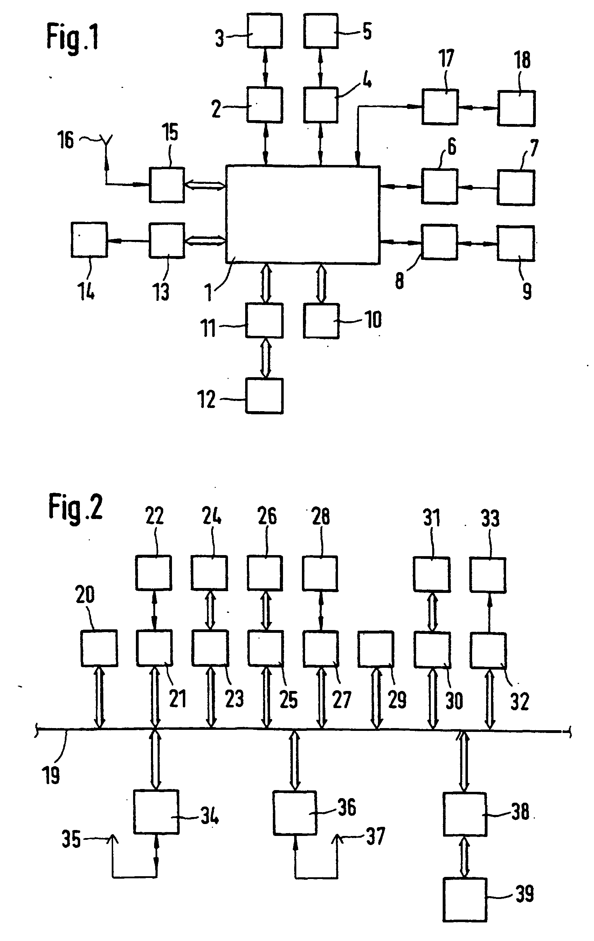

Figur 1 zeigt das erfindungsgemäße Fahrerassistenzsystem, wobei verschiedene Geräte mit einem Prozessor 1 verbunden sind.

Über einen ersten Datenein-/ausgang ist eine Signalverarbeitung 2 an den Prozessor 1 angeschlossen. Über einen zweiten Datenein-/ausgang der Signalverarbeitung 2 ist eine Kamera 3 angeschlossen. Über seinen zweiten Datenein-/ausgang ist der Prozessor 1 mit einer Signalverarbeitung 4 verbunden. Die Signalverarbeitung 4 ist über ihren zweiten Datenein-/ausgang mit einem Mikrofon 5 verbunden. Der Prozessor 1 ist über seinen dritten Datenein-/-ausgang mit einer Signalverarbeitung 6 verbunden. An einen zweiten Datenein-/ausgang der Signalverarbeitung 6 ist ein haptisches Bedienelement 7 angeschlossen. Über seinen vierten Datenein-/ausgang ist der Prozessor 1 mit einer Signalverarbeitung 8 verbunden. Die Signalverarbeitung 8 ist über ihren zweiten Datenein-/ausgang mit einer Anzeige 9 verbunden. Über seinen fünften Datenein-/ausgang ist der Prozessor 1 mit einem Speicher 10 verbunden. An seinem sechsten Datenein-/ausgang ist der Prozessor 1 mit einer Signalverarbeitung 11 verbunden. Sensoren 12 sind an einen zweiten Datenein-/ausgang der Signalverarbeitung 11 angeschlossen. An einen siebten Datenein-/ausgang des Prozessors 1 ist eine Signalverarbeitung 13 angeschlossen. An einen Datenausgang der Signalverarbeitung 13 ist ein Lautsprecher 14 angeschlossen. Über seinen achten Datenein-/ausgang ist der Prozessor 1 mit einer Sende-/Empfangsstation 15 verbunden. Über ihren zweiten Datenein-/ausgang ist die Sende-/Empfangsstation 15 mit einer Antenne 16 verbunden. Über seinen neunten Datenein-/ausgang ist der Prozessor 1 mit einer Signalverarbeitung 17 verbunden. Ein zweiter Datenein-/ausgang der Signalverarbeitung 17 führt zu Aktoren 18.

Ein Fahrer des Fahrzeugs, in dem sich das Fahrerassistenzsystem nach Figur 1 befindet, macht haptische Eingaben mittels des haptischen Bedienelements 7. Solch ein haptisches Bedienelement 7 ist ein manuell bedienbares Element wie z.B. eine Taste, ein Rädchen, ein Trackball, ein Drehknopf und andere Elemente, die Dreh- oder Führ- oder Druckbewegungen ermöglichen. Das haptische Bedienelement 7 repräsentiert daher nicht nur ein Bedienelement sondern, wenn vorhanden, mehrere.

Die haptischen Bedienelemente 7 weisen Sensoren auf, die die mechanische Bewegung in elektrische Signale umsetzen. Diese werden dann mit angeschlossener Elektronik verstärkt und gegebenenfalls digitalisiert. Der so entstandene Datenstrom wird an die Signalverarbeitung 6 übergeben. Die Signalverarbeitung 6 führt, wenn das haptische Bedienelement 7 die Digitalisierung noch nicht durchgeführt hat, die Digitalisierung durch. Des weiteren führt die Signalverarbeitung 6 eine Fehlerkorrektur durch. Gegebenenfalls wird auch noch eine Quellencodierung vorgenommen. Der Datenstrom wird in ein Datenformat, das der Prozessor 1 liest, umformatiert. Zur Erledigung dieser Aufgaben weist die Signalverarbeitung 6 einen Prozessor auf. Das haptische Eingabesignal wird dann von der Signalverarbeitung 6 an den Prozessor 1 übertragen. Der Prozessor 1 interpretiert die Daten von der Signalverarbeitung 6 als Ausführungsbefehl.

Dabei berücksichtigt der Prozessor 1 Daten von den Mitteln zur Personenerkennung. Zu diesen Mitteln gehören die Kamera 3 mit der Signalverarbeitung 2 und das Mikrofon 5 mit der Signalverarbeitung 4. Die Kamera 3 und auch das Mikrofon 5 werden dazu verwendet, um einerseits einen Fahrerzustand zu ermitteln, liegt also eine Streßsituation oder eine entspannte Situation vor, und andererseits, um Wünsche des Fahrers, die mittels der Sprache oder der Blickrichtung gemacht werden, zu erfassen. Die Fahrerzustandserkennung wird dadurch durchgeführt, dass die Daten der Kamera 3 und des Mikrofons 5 von der Signalverarbeitung 2 bzw. der Signalverarbeitung 4 mit abgespeicherten Daten verglichen werden, um den Streßzustand des Fahrers zu ermitteln. Bei den Kameradaten wird insbesondere darauf geachtet, wie die Gesichtsmuskelanspannung des Fahrers ist, während bei der Sprache, die mittels des Mikrofons 5 aufgenommen wird, das Frequenzspektrum der Sprache und auch der zeitliche Verlauf der sprachlichen Äußerungen analysiert werden. Unter dem zeitlichen Verlauf ist beispielsweise zu verstehen, wie schnell eine Person spricht und ob große Dynamikunterschiede in kurzer Zeit vorliegen. Diese Daten sind dann mit einem durchschnittlichen Sprachverhalten der betreffenden Person zu vergleichen. Mit der Kamera 3 und dem Mikrofon 5 sowie der angeschlossenen Signalverarbeitungen werden damit biometrische Daten des Fahrers ermittelt.

Werden die Kamera 3 und/oder das Mikrofon 5 als Eingabemittel verwendet, wird bei der Kamera 3 dies in Kombination mit der Anzeige 9 vorgenommen. Dabei wird die Blickrichtung des Fahrers im Hinblick auf die dargestellten Symbole auf der Anzeige 9 ausgewertet. Dazu weist die Kamera 3 eine Blickrichtungserkennung auf. Diese Auswertung erfolgt durch den Prozessor 1, der die Daten von der Signalverarbeitung 2, der Kamera 3 und von der Signalverarbeitung 8 der Anzeige 9 erhält. Die Signalverarbeitung 2 weist wie auch die Signalverarbeitung 4 jeweils einen Signalprozessor auf, um die Daten der Kamera 3 bzw. des Mikrofons 5 zu verarbeiten.

Werden Befehle mittels Sprache von dem Fahrer gemacht, dann wird mittels des Mikrofons 5 die Sprache empfangen und in elektrische Signale umgesetzt, um dann mittels der Signalverarbeitung 4 ausgewertet zu werden. Dabei wird das empfangene Spektrum mit abgespeicherten Spektren verglichen, um eine Sprachanalyse und damit eine Befehlsauswertung durchzuführen.

Der Prozessor 1 hat damit, falls alle möglichen Eingabemittel verwendet wurden, die Kamera 3, das Mikrofon 5 und die haptischen Bedienelemente 7 bis zu drei unterschiedliche Ausführungsbefehle vorliegen. Die Ausführungsbefehle müssen gegebenenfalls priorisiert werden, um die Ausführungsbefehle in einer zeitlichen Abfolge durchzuführen. Zunächst ist jedoch zu überprüfen, ob die Ausführungsbefehle überhaupt ausführbar sind. Dazu werden im Speicher 10 abgespeicherte Daten geladen, so dass der Prozessor 1 eine Aussage über die Ausführbarkeit der Befehle machen kann, wobei der Prozessor 1 einen Merkmalsabgleich durchführt.

Im Speicher 10 sind die Geräteeigenschaften des vorhandenen Fahrerassistenzsystems abgelegt. Dabei sind allgemeine Merkmale mit Geräten verknüpft. Will beispielsweise der Fahrer klassische Musik hören, dann ist das Merkmal klassische Musik mit vorhandenen Geräten verknüpft, die klassische Musik liefern können. Dazu gehören zunächst der Speicher 10 und/oder die Sende-/Empfangsstation 15, wobei die Sende-/Empfangsstation 15 sowohl Empfangsstationen, also ein Autoradio, als auch Mobiltelefone repräsentiert. Ferner gehört zu einem Autoradio üblicherweise auch ein Wiedergabegerät, also ein Kassettenabspielgerät, ein CD- oder ein Minidiscabspielgerät. Als Speichermedien sind hier eine CD, ein MPEG3-Speicher, Minidisc, eine Audiokassette, Festplatten oder eine DVD möglich. Der Speicher 10 und/oder das Autoradio weisen solche Speichermedien auf. Sie können dabei jeweils nur ein, aber alternativ auch gleichzeitig mehrere Speichermedien aufweisen.

Will der Fahrer ein bestimmtes Musikstück hören, und dieses Musikstück ist auf vorhandenen Speichermedien nicht verfügbar, ist es möglich, mittels der Sende- /Empfangsstation 15 eine Datei über eine Funkverbindung zu laden, die das entsprechende Musikstück enthält. Ist auch das nicht möglich, dann wird anhand einer Merkmalsbestimmung des Musikstücks, z.B. ein Klavierkonzert, ein stilähnliches Stück als Alternative angeboten, wobei auf der Anzeige 9 eine Ausgabe vorgenommen wird, dass dies ein Alternativstück ist. Die Ausgabe auf der Anzeige 9 kann alternativ auch unterbleiben.

Weiterhin ist es auch möglich, dass, wenn ein Musikstück nicht auf lokalen Speichermedien, also insbesondere der Speicher 10, vorhanden ist, mittels im Speicher 10 abgespeicherter Daten, die ein Benutzerprofil des Fahrers ausmachen, andere Präferenzen bezüglich Musikstücke des Fahrers zu ermitteln. Auch dadurch kann ein alternativer Radiosender, der entsprechende Musik liefert, eingestellt werden. Auch dies kann optional auf der Anzeige 9 dargestellt werden.

Hat der Prozessor 1 nun ein Musikstück zur Wiedergabe gefunden, dann gleicht der Prozessor 1 die Musik noch mit der momentanen Fahrsituation ab. Daten über die Fahrsituation erhält der Prozessor 1 einerseits von den Sensoren 12 und andererseits von der Sende-/Empfangsstation 15. Die Sensoren 12 weisen Geschwindigkeitssensoren, Abstandssensoren, Öl- und Wasserstand sowie weitere fahrzeugspezifische Daten auf, die eine kritische Fahrsituation indizieren können. Dazu gehören auch Helligkeitssensoren, die bei Dämmerung oder Nacht ein erhöhtes Gefahrenpotenzial anzeigen, und Sensoren, die Signale entsprechend der Witterung geben, die also insbesondere auf Regen, Nebel und niedrige oder sehr hohe Umgebungstemperaturen reagieren.

Mittels der Sende-/Empfangsstation 15 ermittelt der Prozessor 1 den Standort des Fahrzeugs und aktuelle Verkehrsinformationen für diesen Standort. Dies ist in Verbindung mit dem Speicher 10 zu sehen, der elektronische Daten aufweist, so dass damit ein Navigationssystem realisiert ist. Alternativ kann ein Navigationsgerät auch an den Prozessor 1 angeschlossen sein.

Liegt eine kritische Situation vor, dann wird der Prozessor 1 keine Musik abspielen, die zu einem erhöhten Streßverhalten des Fahrers führen wird, sondern eine entspannende Musik auswählen. Musik wird daher auch nach diesem Merkmal klassifiziert oder zumindest weist der Speicher 10 Daten auf, die es dem Prozessor 1 erlauben, Musik nach solchen Merkmalen selbst zu klassifizieren. Die Musikdaten werden dann der Signalverarbeitung 13 übergeben, die eine Dekodierung der Daten und eine Digital-Analogwandlung durchführt, wobei dann die analogen Signale von dem Lautsprecher 14 mittels angeschlossener Elektronik verstärkt und dann mittels des Lautsprechers selbst wiedergegeben werden.

Die Sende-/Empfangsstation 15 mit der angeschlossenen Antenne 16 repräsentiert einerseits ein Autoradio, also eine reine Empfangsstation, und andererseits ein Kommunikationsmittel in einem Fahrzeug, also typischerweise ein Mobiltelefon. Das Autoradio wird zum Empfang von Radiosendern benutzt und, wie oben dargestellt, zum Abspielen von Speichermedien verwendet. Das Autoradio weist einen eigenen Prozessor zur Dekodierung der Audiodaten auf. Im Falle eines digitalen Rundfunkempfängers, wird das Autoradio auch als Datenempfänger für Multimediadaten verwendet. DAB (Digital Audio Broadcasting) DRM (Digital Radio Mondial) oder DVB (Digital Video Broadcasting) sind geeignete digitale Übertragungsverfahren, die auch neben Audioprogrammen besonders für die Datenübertragung ausgerichtet sind. Mittels dieser digitalen Übertragungsverfahren sind insbesondere breitbandige Datenübertragungen möglich.

Wird die Sende-/Empfangsstation 15 als Kommunikationsmittel im Duplexbetrieb verwendet, dann wirkt die Sende-/Empfangsstation 15 mit der Antenne 16 als Mobiltelefon. Üblicherweise werden die bekannten digitalen Mobilfunkstandards GSM (Global System for Mobile Communication) und UMTS (Universal Mobile Telecommunication System) hierbei verwendet. Vorteilhafterweise kann ein Mobiltelefon einerseits zum Abruf und Laden von Daten von externen Datenquellen verwendet werden, zum anderen im Zusammenspiel mit dem Autoradio als Rückkanal beim Laden von Multimediadaten über digitalen Rundfunk.

Wird nun der Fahrer über die Sende-/Empfangsstation 15 kontaktiert, dann wird dieser Anruf als Ausführungsbefehl von dem Prozessor 1 interpretiert, was gleichbedeutend mit einer Eingabe durch den Fahrer ist. In Abhängigkeit von der Fahrsituation wird dem Fahrer angezeigt, dass ein Anruf vorliegt. Ist es eine streßfreie Situation, dann wird dies mittels des Lautsprechers 14 vorgenommen. Liegt ein erhöhter Streßfaktor vor, dann wird dies nur auf der Anzeige 9 dargestellt. Ein Anruf wird im Vergleich zu anderen Ausführungsbefehlen, z. B. dem Abspielen von Musik oder anderen Aktionen betreffend der Unterhaltung, höher priorisiert. Auch Verkehrsinformationen, die den Standortbereich des Fahrzeugs betreffen, werden gegenüber der Unterhaltung höher priorisiert.

Dem Fahrer ist es auch möglich mittels des erfindungsgemäßen Fahrerassistenzsystems Aktoren 18 einzustellen. Solche Aktoren 18 betreffen den Sitz des Fahrers, Spiegeleinstellungen eine automatische Abstandsregelung, Fensterheber und auch eine Klimaregelung, also insbesondere Stellglieder. Auch solche Befehle können multimedial von dem Fahrer ausgeführt werden. Also entweder mittels des haptischen Bedienelements 7, des Mikrofons 5 oder der Kamera 3. Solche Einstellungen werden im Vergleich zu wichtigen Informationsdarstellungen wie Verkehrinformationen niedriger priorisiert. Die Befehle die Aktorik 18 betreffend werden dann von dem Prozessor 1 der Signalverarbeitung 17 übergeben, die dann die Aktorik 18 steuert. Dabei kann hier auch die Aktorik 18 über einen Fahrzeugbus verbunden sein.

Die Anzeige 9 kann alternativ zum haptischen Bedienelement 7 auch als manuelles Bedienelement verwendet werden, wenn die Anzeige 9 mit einer berührungssensitiven Schicht versehen wird. Solch eine berührungssensitive Schicht ist hier als analoges Touchpanel ausgeführt. D. h. durch den Druck auf die Anzeige 9 werden ausgehend vom Druckpunkt vier Widerstände generiert. Mittels dieser Widerstände kann der Druckpunkt berechnet und damit als Eingabesignal interpretiert werden. Alternativ kann eine Matrix von transparenten Leiterbahnen verwendet werden, so dass dann ein digitales Touchpanel vorliegt. Eine weitere Alternative stellt ein Infrarottouchpanel dar. Hier wird eine Matrix von Infrarotstrahlen über das Anzeigenfeld gelegt, wobei die Berührung dann mittels Unterbrechung dedektiert wird.

Die Anzeige 9 kann alternativ entweder als Monitor, als Netzhautprojektor, als stereoskopischer Bildschirm oder auch als Frontscheibenprojektor ausgeführt sein.

Das Fahrerassistenzsystem nach Figur 1 kann im Hinblick auf die Eingabevorrichtungen auch ohne die Kamera 3 und/oder das Mikrofon 5 und/oder das haptische Bedienelement 7 ausgeführt sein.

In Figur 2 ist das erfindungsgemäße Fahrerassistenzsystem dargestellt, wobei hier die Komponenten über einen Bus 19 verbunden sind. Alle an den Bus angeschlossenen Geräte weisen einen Buscontroller auf, der die Kommunikation über den Bus 19 regelt. Mittels Datenein-/-ausgängen sind ein Prozessor 20, Signalverarbeitungen 21, 23, 25, 27,ein Speicher 29, eine Signalverarbeitung 30, 32, eine Sende-/Empfangsstation 34, eine Empfangsstation 36 und eine Signalverarbeitung 38 angeschlossen. An die Signalverarbeitung 21 ist über deren zweiten Datenein-/ausgang eine Kamera 22 angeschlossen. An die Signalverarbeitung 23 ist über deren Zeitendatenein-/ausgang ein Mikrofon 24 angeschlossen. An die Signalverarbeitung 25 ist über deren zweiten Datenein-/ausgang ein haptisches Bedienelement 26 angeschlossen. An die Signalverarbeitung 27 ist über deren zweiten Datenein-/ausgang eine Anzeige 28 angeschlossen. An die Signalverarbeitung 30 sind über deren zweiten Datenein-/ausgang Sensoren 31 angeschlossen. An einem zweiten Datenein-/ausgang der Signalverarbeitung 32 ist ein Lausprecher 33 angeschlossen. Die an den zweiten Datenein-/ausgang der Sendeempfangsstation 34 ist eine Antenne 35 angeschlossen. An die Empfangsstation 36 ist an deren Dateneingang eine Antenne 37 angeschlossen. An den zweiten Datenein-/-ausgang der Signalverarbeitung 38 sind Aktoren 39 angeschlossen.

Diese Funktionsweise entspricht der die für Figur 1 beschrieben wurde. Im Unterschied zu Figur 1 wurde hier getrennt von der Sende-/Empfangsstation 34 eine Empfangsstation 36, mit einer Antenne 37 eingezeichnet, die hier als Autoradio wirkt.

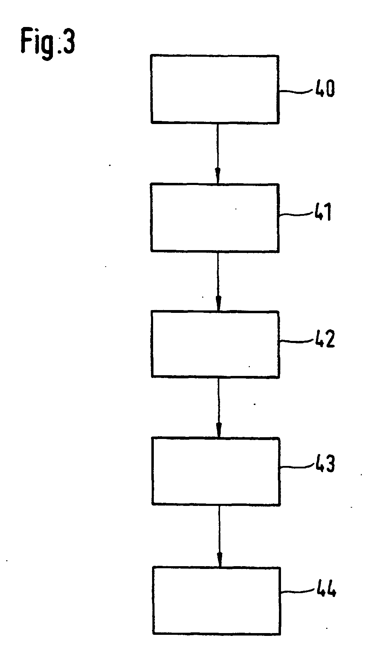

In Figur 3 ist das erfindungsgemäße Verfahren zur Steuerung einer Informationsdarstellung, von Kommunikationsmitteln und einer Aktorik in einem Fahrzeug dargestellt. In Verfahrensschritt 40 wird einer Eingabe durch einen Fahrer vorgenommen. In Verfahrensschritt 41 interpretiert das erfindungsgemäße Fahrzeugassistenzsystem die Eingabe in einen Ausführungsbefehl. In Verfahrensschritt 42 wird der Ausführungsbefehl mit Daten von Mitteln zur Personenerkennung, von einer Situationserkennung von Sensorwerten und von vorhandenen Steuerbahngeräten zur Informationsdarstellung und von den Kommunikationsmitteln abgeglichen. In Verfahrensschritt 43 wird dann eine Priorisierung des Ausführungsbefehls durchgeführt. In Verfahrensschritt 44 wird der Ausführungsbefehl ausgeführt.

## Patentansprüche

1. Fahrerassistenzsystem, das zur Steuerung von einer Informationsdarstellung (9, 14, 28, 33), von Kommunikationsmitteln (15, 16, 34-37) und von einer Aktorik (18, 39) in einem Fahrzeug mittels eines Prozessors (1, 20) konfiguriert ist, wobei das Fahrerassistenzsystem multimediale Eingabemöglichkeiten (7, 12, 15, 16, 26, 31, 43-37) aufweist, wobei das Fahrerassistenzsystem Benutzereingaben über die multimedialen Eingabemöglichkeiten (7, 12, 15, 16, 26, 31, 34-37) und Daten von Mitteln (3, 5, 22, 24) zur Personenerkennungals Ausführungsbefehle zur Steuerung interpretiert, **dadurch gekennzeichnet, dass** das Fahrerassistenzsystem die Ausführungsbefehle in Abhängigkeit von einer Situationserkennung, von Sensorwerten von Sensoren (12, 31) und von vorhandenen Geräten (9, 14, 28, 33) zur Informationsdarstellung und von abgespeicherten Daten in einem Speicher (10, 29) ausführt.

2. Fahrerassistenzsystem nach Anspruch 1, **dadurch gekennzeichnet, dass** der Prozessor (1, 20) so ausgebildet ist, dass der Prozessor (1, 20)ein Benutzerprofil als abgespeicherte Daten anlegt, indem der Prozessor (1, 20) in Abhängigkeit von den Daten der Mittel (3, 5, 22, 24) zur Personenerkennung, die aktuellen Einstellungen für die Aktoren (18, 39), die Kommunikationsmittel (15, 16, 34-37), die vorhandenen Gertäre zur Informationsdarstellung (9, 14, 28, 33) und den Lausprecher (14, 33) speichert, falls sich die bereits abgespeicherten Einstellungen für diese Daten von den Mitteln (3, 5, 22, 24) zur Personenerkennung von den aktuellen Einstellungen unterscheiden, und dass der Prozessor (1, 20) die Ausführungen der Ausführungsbefehle in Abhängigkeit von dem Benutzungprofil durchführt.

3. Fahrerassistenzsystem nach Anspruch 1 oder 2, **dadurch gekennzeichnet, dass** der Prozessor (1, 20) so ausgebildet ist, dass der Prozessor (1, 20) in Abhängigkeit von den Daten von den Benutzereingaben und den Mitteln (3, 5, 22, 24) zur Personenerkennung, den Kommunikationsmitteln (15, 16,34 - 37), den Sensorwerten und von den abgespeicherten Daten für die Ausführungsbefehle, Prioritäten vergibt und dass der Prozessor (1, 20) die Ausführungsbefehle nach den vergebenen Prioritäten bearbeitet.

4. Fahrerassistenzsystem nach Anspruch 3, **dadurch gekennzeichnet, dass** die Mittel (3, 5, 22, 24) zur Personenerkennung Signalprozessoren aufweisen, die so ausgebildet sind, dass sie einen Zustand eines Fahrers bestimmen.

5. Fahrerassistenzsystem nach Anspruch 3, **dadurch gekennzeichnet, dass** die Anzeige (9, 28) einen Netzhautprojektor aufweist.

6. Fahrerassistenzsystem nach Anspruch 3, **dadurch gekennzeichnet, dass** die Anzeige (9,28) einen stereoskopischen Bildschirm aufweist.

7. Fahrerassistenzsystem nach Anspruch 3, **dadurch gekennzeichnet, dass** die Anzeige (9, 28) einen Frontschutzscheibenprojektor aufweist.

8. Fahrerassistenzsystem nach einem der vorhergehenden Ansprüche, **dadurch gekennzeichnet, dass** die Mittel (3, 5, 22, 24) zur Personenerkennung ein Mikrofon (5, 24) aufweisen, das als Eingabevorrichtung verwendbar ist.

9. Fahrerassistenzsystem nach einem der vorhergehenden Ansprüche, **dadurch gekennzeichnet, dass** die Anzeige 9, 28 eine berührungssensitive Schicht aufweist, so dass die Anzeige 9, 28 als Eingabevorrichtung verwendbar ist.

10. Fahrerassistenzsystem nach einem der vorhergehenden Ansprüche, **dadurch gekennzeichnet, dass** die Mittel (3, 5, 22, 24) zur Personenerkennung wenigstens eine Kamera (3, 22) aufweisen, wobei die wenigstens eine Kamera (3, 22) eine Blickrichtungserkennung aufweist, so dass die wenigstens eine Kamera (3, 22) als Eingabevorrichtung verwendbar ist.

11. Fahrerassistenzsystem nach einem der vorhergehenden Ansprüche, **dadurch gekennzeichnet, dass** der Prozessor (1,20) in Abhängigkeit von dem Zustand des Fahrers abgespeicherte Einstellungen aus dem Speicher (9, 29) lädt und verwendet..

12. Fahrerassistenzsystem nach einem der vorhergehenden Ansprüche, **dadurch gekennzeichnet, dass** der Prozessor(1, 20) mit anderen Komponenten über einen Bus (19) verbunden ist.

13. Verfahren zur Steuerung von einer Informationsdarstellung (9, 14, 28, 33), von Kommunikationsmitteln (15, 16, 34-37) und von einer Aktorik (18, 39) in einem Fahrzeug, wobei Benutzereingaben über multimediale Eingabemöglichkeiten (7, 12, 15, 16, 26, 31, 34-37) und Daten von Mitteln (3, 5, 22, 24) zur Personenerkennung als Ausführungsbefehle zur Steuerung interpretiert werden, **dadurch gekennzeichnet dass** die Ausführungsbefehle in Abhängigkeit von einer Situationserkennung, von Sensorwerten und von vorhandenen Geräten zur Informationsdarstellung und von abgespeicherten Daten ausgeführt werden.

14. Verfahren nach Anspruch 13, **dadurch gekennzeichnet, dass** ein Benutzerprofil für eine mit den Mitteln zur Personenerkennung erkannte Person angelegt wird, wobei das Benutzerprofil für von der Personen bevorzugte Einstellungen bezüglich der Aktorik (18, 39), den Kommunikationsmitteln (15, 16, 34-37) und der Informationsdarstellung (9, 14, 28, 33) aufweist, und dass die Durchführung der Ausführungsbefehle in Abhängigkeit von dem Benutzerprofil ausgeführt wird.

15. Verfahren nach Anspruch 14, **dadurch gekennzeichnet, dass** nach den Benutzereingaben, den Daten von den Mitteln (3, 5, 22, 24) zur Personerkennung, den Sensorwerten und von abgespeicherten Daten für die Ausführungsbefehle Prioritäten vergeben werden, nach denen die Ausführungsbefehle ausgeführt werden.

## Claims

1. Driver assistance system, which is configured in order to control an information display (9, 14, 28, 33), communication means (15, 16, 34-37) and an actuator system (18, 39) in a vehicle by means of a processor (1, 20), with the driver assistance system having multimedia input capabilities (7, 12, 15, 16, 26, 31, 43-37), with the driver assistance system interpreting user inputs via the multimedia input capabilities (7, 12, 15, 16, 26, 31, 34-37) and data from means (3, 5, 22, 24) for personal identification as execution commands for control, **characterized in that** the driver assistance system carries out the execution commands as a function of a situation identification, sensor values from sensors (12, 13) and from existing appliances (9, 14, 28, 33) for information display and from stored data in a memory (10, 29).

2. Driver assistance system according to Claim 1, **characterized in that** the processor (1, 20) is designed such that the processor (1, 20) makes use of a user profile as stored data, **in that** the processor (1, 20) stores the current settings for the actuator systems (18, 39), the communication means (15, 16, 34-37), the existing appliances for information display (9, 14, 28, 33) and the loudspeaker (14, 33) as a function of the data of the means (3, 5, 22, 24) for personal identification, if the already stored settings for these data items from the means (3, 5, 22, 24) for personal identification differ from the current settings, and **in that** the processor (1, 20) carries out the execution commands as a function of the usage profile.

3. Driver assistance system according to Claim 1 or 2, **characterized in that** the processor (1, 20) is designed such that the processor (1, 20) allocates priorities as a function of the data from the user inputs and the means (3, 5, 22, 24) for personal identification, the communication means (15, 16, 34-37), the sensor values and from the stored data for the execution commands, and **in that** the processor (1, 20) processes the execution commands on the basis of the allocated priorities.

4. Driver assistance system according to Claim 3, **characterized in that** the means (3, 5, 22, 24) for personal identification have signal processors which are designed such that they determine a state of a driver.

5. Driver assistance system according to Claim 3, **characterized in that** the display (9, 28) has a retina projector.

6. Driver assistance system according to Claim 3, **characterized in that** the display (9, 28) has a stereoscopic screen.

7. Driver assistance system according to Claim 3, **characterized in that** the display (9, 28) has a front windscreen projector.

8. Driver assistance system according to one of the preceding claims, **characterized in that** the means (3, 5, 22, 24) for personal identification have a microphone (5, 24) which can be used as an input apparatus.

9. Driver assistance system according to one of the preceding claims, **characterized in that** the display (9, 28) has a touch-sensitive layer, such that the display (9, 28) can be used as an input apparatus.

10. Driver assistance system according to one of the preceding claims, **characterized in that** the means (3, 5, 22, 24) for personal identification have at least one camera (3, 22) with the at least one camera (3, 22) having viewing direction identification such that the at least one camera (3, 22) can be used as an input apparatus.

11. Driver assistance system according to one of the preceding claims, **characterized in that** the processor (1, 20) loads stored settings from the memory (9, 29), and uses them, as a function of the state of the driver.

12. Driver assistance system according to one of the preceding claims, **characterized in that** the processor (1, 20) is connected to other components via a bus (19).

13. Method for controlling an information display (9, 14, 28, 33), communication means (15, 16, 34-37) and an actuator system (18, 39) in a vehicle, with user inputs being interpreted via multimedia input capabilities (7, 12, 15, 16, 26, 31, 34-37) and data from means (3, 5, 22, 24) for personal identification as execution commands for control, **characterized in that** the execution commands are carried out as a function of a situation identification, of sensor values and of existing appliances for information display and of stored data.

14. Method according to Claim 13, **characterized in that** a user profile for a person who is identified by the means for personal identification is used, with the user profile having settings, preferred by those people, with regard to the actuator system (18, 39), the communication means (15, 16, 34-37) and the information display (9, 14, 28, 33), and **in that** the execution commands are carried out as a function of the user profile.

15. Method according to Claim 14, **characterized in that** priorities, on the basis of which the execution commands are carried out, are allocated on the basis of the user inputs, the data from the means (3, 5, 22, 24) for personal identification, the sensor values and stored data for the execution commands.

## Revendications

1. Système d'assistance au conducteur configuré pour commander une représentation d'informations (9, 14, 28, 33), des moyens de communication (15, 16, 34 à 37) et un système d'actionneurs (18, 39) dans un véhicule à l'aide d'un processeur (1, 20), et comportant des possibilités d'entrée (7, 12, 15, 16, 26, 31, 34 à 37) multimédia, le système d'assistance au conducteur interprétant des entrées d'utilisateur réalisées par l'intermédiaire des possibilités d'entrée (7, 12, 15, 16, 26, 31, 34 à 37) et des données provenant de moyens de reconnaissance des personnes (3, 5, 22, 24) comme des instructions d'exécution pour la commande,
**caractérisé en ce que**
le système d'assistance au conducteur exécute les instructions d'exécution en fonction d'une reconnaissance de situation, de valeurs provenant de capteurs (12, 31) et d'appareils (9, 14, 28, 33) existants destinés à représenter des informations et de données mémorisées dans une mémoire (10, 29).

2. Système d'assistance au conducteur selon la revendication 1,
**caractérisé en ce que**
le processeur (1, 20) est conçu pour appliquer un profil d'utilisateur sous forme de données enregistrées du fait que le processeur (1, 20), en fonction des données provenant des moyens de reconnaissance de personnes (3, 5, 22, 24) mémorise les réglages momentanés pour les actionneurs (18, 39), les moyens de communication (15, 16, 34 à 37), les appareils (9, 14, 28, 33) existants destinés à représenter des informations et le haut-parleur (14, 33), si les réglages déjà enregistrés pour ces données provenant des moyens de reconnaissance de personnes (3, 5, 22, 24) sont différents des réglages momentanés, et
le processeur (1, 20) exécute les instructions d'exécution en fonction du profil d'utilisateur.

3. Système d'assistance au conducteur selon la revendication 1 ou 2,
**caractérisé en ce que**
le processeur (1, 20) est conçu pour attribuer des priorités en fonction des données entrées par l'utilisateur et des moyens de reconnaissance de personnes (3, 5, 22, 24), des moyens de communication (15, 16, 34 à 37), des valeurs des capteurs et des données mémorisées pour les instructions d'exécution, et
le processeur (1, 20) traite les instructions d'exécution d'après les priorités attribuées.

4. Système d'assistance au conducteur selon la revendication 3,
**caractérisé en ce que**
les moyens de reconnaissance de personnes (3, 5, 22, 24) comportent des processeurs analogiques conçus pour déterminer un état du conducteur.

5. Système d'assistance au conducteur selon la revendication 3,
**caractérisé en ce que**
l'affichage (9, 28) comporte un projecteur rétinien.

6. Système d'assistance au conducteur selon la revendication 3,
**caractérisé en ce que**
l'affichage (9, 28) comporte un écran stéréoscopique.

7. Système d'assistance au conducteur selon la revendication 3,
**caractérisé en ce que**
l'affichage (9, 28) comporte un projecteur de pare-brise.

8. Système d'assistance au conducteur selon l'une des revendications précédentes,
**caractérisé en ce que**
les moyens de reconnaissance de personnes (3, 5, 22, 24) comportent un microphone (5, 24) qui peut être utilisé comme dispositif d'entrée.

9. Système d'assistance au conducteur selon l'une des revendications précédentes,
**caractérisé en ce que**
l'affichage (9, 28) présente une couche sensible au toucher de sorte que l'affichage (9, 28) peut être utilisé comme dispositif d'entrée.

10. Système d'assistance au conducteur selon l'une des revendications précédentes,
**caractérisé en ce que**
les moyens de reconnaissance de personnes (3, 5, 22, 24) présentent au moins une caméra (3, 22), l'au moins une caméra (3, 22) comportant une reconnaissance de la direction du regard, de sorte que l'au moins une caméra (3, 22) peut être utilisée comme dispositif d'entrée.

11. Système d'assistance au conducteur selon l'une des revendications précédentes,
**caractérisé en ce que**
le processeur (1, 20) charge et utilise des réglages enregistrés à partir de la mémoire (9, 29) en fonction de l'état du conducteur.

12. Système d'assistance au conducteur selon l'une des revendications précédentes,
**caractérisé en ce que**
le processeur (1, 20) est relié à d'autres composants par l'intermédiaire d'un bus (19).

13. Procédé pour commander une représentation d'informations (9, 14, 28, 33), des moyens de communication (15, 16, 34 à 37) et un système d'actionneurs (18, 39) dans un véhicule à l'aide d'un processeur (1, 20), d'après lequel des entrées de l'utilisateur réalisées par l'intermédiaire des possibilités d'entrée (7, 12, 15, 16, 26, 31, 34 à 37) et des données provenant de moyens de reconnaissance de personnes (3, 5, 22, 24) sont interprétées comme des instructions d'exécution pour la commande,
**caractérisé en ce que**
les instructions d'exécution sont exécutées en fonction d'une reconnaissance de situation, de valeurs de capteurs et d'appareils existants destinés à représenter des informations et de données mémorisées.

14. Procédé selon la revendication 13,
**caractérisé en ce qu'**
un profil d'utilisateur est appliqué à une personne reconnue par les moyens de reconnaissance des personnes, le profil d'utilisateur comportant des données utilisateur pour des réglages préférés par les personnes pour ce qui est du système d'actionneurs (18, 39), des moyens de communication (15, 16, 34 à 37) et de la représentation d'informations (9, 14, 28, 33), et
les instructions d'exécution sont exécutées en fonction du profil d'utilisateur.

15. Procédé selon la revendication 14,
**caractérisé en ce qu'**
en fonction des entrées de l'utilisateur, des données provenant des moyens (3, 5, 22, 24) de reconnaissance des personnes, des valeurs de capteurs et de données enregistrées pour les instructions d'exécution, on attribue aux instructions des priorités d'exécution.
